(19) Europäisches Patentamt

European Patent Office

Office européen des brevets

(11) **EP 1 376 846 B1**

(12) **FASCICULE DE BREVET EUROPEEN**

(45) Date de publication et mention
de la délivrance du brevet:
**16.08.2006 Bulletin 2006/33**

(51) Int Cl.:
***H02N 11/00*** (2006.01) ***F04B 19/00*** (2006.01)

(21) Numéro de dépôt: **03101771.8**

(22) Date de dépôt: **17.06.2003**

(54) **Dispositif de déplacement de petits volumes de liquide le long d'un micro-catenaire par des forces électrostatiques**

Vorrichtung zum Austragen kleiner Volumen Flüssigkeit einer Mikrokettenlinie entlang

Device for the displacement of small volumes of liquid along a micro-catenary using electrostatic forces

(84) Etats contractants désignés:
**AT BE BG CH CY CZ DE DK EE ES FI FR GB GR HU IE IT LI LU MC NL PT RO SE SI SK TR**

(30) Priorité: **18.06.2002 FR 0207477**

(43) Date de publication de la demande:
**02.01.2004 Bulletin 2004/01**

(73) Titulaire: **COMMISSARIAT A L'ENERGIE ATOMIQUE**
**75752 Paris Cédex 15 (FR)**

(72) Inventeurs:
• **FOUILLET, Yves**
**38340, VOREPPE (FR)**
• **CHARLES, Raymond**
**38430, SAINT-JEAN de MOIRANS (FR)**
• **CONSTANTIN, Olivier**
**38100, GRENOBLE (FR)**
• **JEANSON, Hubert**
**38140, SAINT MARTIN D'URIAGE (FR)**

(74) Mandataire: **Poulin, Gérard et al**
**Société BREVATOME**
**3, rue du Docteur Lancereaux**
**75008 Paris (FR)**

(56) Documents cités:
FR-A- 2 794 039  US-A- 4 569 575
US-A- 5 181 016

## Description

### Domaine technique

L'invention concerne un dispositif de manipulation de gouttes de petits volumes de quelques nanolitres, à quelques microlitres. Le dispositif de déplacement utilise des forces électrostatiques pour obtenir le déplacement des petits volumes de liquide.

### Etat de la technique antérieure

Les liquides ont une importance croissante dans les composants de petites dimensions. Ainsi, les laboratoires sur puce ou "lab-on-chip" font l'objet de nombreuses études, principalement dans les domaines de la biologie, de la chimie, ou de l'optique. La micro-fluidique consiste dans certains cas à faire circuler des petits volumes de liquide dans des canaux micro-usines. Ceci permet d'appliquer par exemple un protocole biologique sur un tout petit volume d'échantillon. Il est actuellement reconnu que la minimisation des volumes d'analyse permet de nombreux avantages tels que des gains en coût, des gains de rapidité ou de sensibilité.

Cependant, la miniaturisation de la section des canaux apporte aussi de nombreuses difficultés. D'une part, il est difficile de contrôler des déplacements de fluide dans ces micro-canaux. D'autre part, les interactions physico-chimiques entre les liquides et les parois deviennent prédominantes. Les phénomènes de capillarité jouent un rôle essentiel ce qui nécessite des états de surface (rugosité, physicochimie) très soignés. De même, des phénomènes d'absorption d'entités biologiques à la surface des parois peuvent limiter les rendements de réactions. Ainsi, il est souvent nécessaire d'appliquer des traitements de surface spécifiques sur la paroi des canaux ou d'ajouter différentes substances dans les protocoles biologiques pour limiter ces phénomènes d'absorption. On trouvera un exemple dans l'article suivant: "Miniaturized flow-through PCR with différent template types in a silicon chip thermocycler" d'Ivonne Schneegaß et al., Lab on a Chip, 2001,1, pages 42-49.

Une autre difficulté de la micro-fluidique en micro-canaux est d'avoir à connecter le composant avec le monde extérieur. La connexion de capillaires à un micro-composant est une des difficultés rencontrées dans la réalisation de laboratoires sur puce. Par ailleurs, il est nécessaire de pouvoir gérer les entrées/sorties des différents liquides depuis ou vers les systèmes externes de stockage de fluide tout en limitant les volumes morts.

Une autre méthode de déplacement de petits volumes de fluide consiste à manipuler une interface entre deux fluides non miscibles. Par exemple, le document FR-A-2 548 431 divulgue un dispositif à commande électrique de déplacement de liquide diélectrique. Une goutte de liquide est placée entre deux plans comportant des couples d'électrodes. La goutte de liquide présente une permittivité supérieure à son environnement défini par l'espace entre les deux plans comportant les électrodes. Le déplacement est commandé électriquement en appliquant des tensions électriques aux couples d'électrodes. Dans ce document, le déplacement est expliqué par l'existence d'une force diélectrique résultant d'une différence de permittivité entre la goutte et son environnement et par des gradients de champ électriques qui résultent des tensions appliquées.

Plus précisément, la force diélectrique tend à attirer le fluide ayant une permittivité la plus élevée vers les zones ou le champ est le plus intense. Cette force est capable de vaincre les forces de tension superficielle ce qui explique de déplacement de la goutte.

Toujours dans le document FR-A-2 548 431, il est recommandé d'avoir une faible mouillabilité du liquide sur les parois. Un traitement de surface du type silane (chlorure d'aminopropyltriméthoxysilyle) est utilisé pour rendre les surfaces peu mouillantes.

Ce principe s'applique donc à des liquides isolants, cependant un liquide très faiblement conducteur peut aussi être utilisé à condition d'utiliser une tension alternative. En effet, l'article "Mouvement d'un fluide en présence d'un champ électrique" de Pierre Atten, D 2850, Techniques de l'Ingénieur, Paris, décrit l'existence de forces électrostatiques dans des fluides. En particulier, il est précisé que pour deux milieux non miscibles "parfaitement isolants ou pour une tension alternative de fréquence f suffisamment élevée ($f \gg 1/\tau$, où $\tau$ est le temps caractéristique de relaxation de la charges d'espace), seul le saut de permittivité à l'interface fournit une contribution à la force électrique".

Une configuration proche de l'enseignement du document FR-A-2 548 431 est décrite dans l'article "Electrowetting-based actuation of liquid droplets for microfluidic applications" de Michael G. Pollack et al., Applied Physics Letters, Vol. 77, N° 11, pages 1725 et 1726, 11 septembre 2000. Une goutte d'eau est placée entre deux plans contenant des électrodes. Les électrodes sont recouvertes d'une couche électriquement isolante, rendue très hydrophobe par un dépôt de Téflon® de faible épaisseur. Le principe de déplacement est expliqué par les phénomènes d'électrocapillarité ou d'électro-mouillage. Le composant présenté dans cet article permet de déplacer des gouttes de 0,7 à 1 $\mu l$ avec des tensions de 120 V.

Il existe aussi des méthodes pour déplacer des gouttes de liquide conducteur. Par exemple, l'article "Microactuation by continuous electrowetting phenomenon and silicon deep RIE process", de Junghoon Lee et al., DSC-Vol. 66, Micro-Electro-Mechanical Systems (MEMS)-1998, ASME 1998 présente une méthode de déplacement de gouttes de mercure dans un canal rempli d'électrolyte par électro-mouillage.

L'électrocapillarité est étudié depuis longtemps (Lippman, 1875). On trouvera une formulation dans l'article "Electrocapillarité et mouillage de films isolants par l'eau", de Bruno Berge, C.R. Acad. Sci. Paris, t.317, série II, pages 157-153, 1993. Une goutte de liquide non diélectrique est déposée sur un substrat comportant une électrode recouverte d'un isolant. Une deuxième électrode est plongée dans la goutte. La goutte s'étale quand on applique une tension électrique entre les deux électrodes. Dans cet article, l'angle de mouillage de la goutte sur la surface 8 est exprimé en fonction de la tension électrostatique V appliquée entre les deux électrodes par la relation (1) :

$$\cos \theta(V) = \cos \theta(O) + \frac{1}{2} \frac{\varepsilon_r}{e\gamma} V^2 \qquad (1)$$

où $\varepsilon_r$ est le coefficient diélectrique de la couche isolante d'épaisseur e, et $\gamma$ est la tension de surface liquide-gaz.

L'article "Moving droplets on asymmetrically structured surfaces" d'O. Sandre et al., Physical Review E, Vol. 60, N°3, septembre 1999, démontre par la théorie et par l'expérimentation, que la mise en vibration d'une goutte placée entre deux substrats présentant une structuration asymétrique peut entraîner le déplacement de cette goutte. Une structuration asymétrique est décrite comme un rainurage en forme de dents de scie. La mise en vibration de la goutte est réalisée par l'application d'un champ électrostatique oscillant entre deux électrodes placées respectivement sur chacun des deux substrats.

L'inconvénient des dispositifs décrits ci-dessus est d'avoir à confiner les gouttes entre deux plans ou dans un canal. Ceci rend l'assemblage et l'utilisation du composant complexe. On retrouve les problèmes de connexions de capillaires qui ont été déjà identifiés pour la micro-fluidique en canaux avec en plus des connexions électriques à prendre en compte. On retrouve aussi les risques des phénomènes d'absorption d'entités biologiques sur les deux plans confinant les gouttes.

Une autre méthode permettant de déplacer des gouttes a été présentée dans l'article "Electrical Actuation of liquid droplets for micro-reactor applications", de Masao Washizu, IEEE Industry Applications Society, Annual meeting, New Orleans, Louisana, 5-9 octobre 1997, et plus récemment dans l'article "Droplet Manipulation on a Superhydrophobic Surface for Microchemical Analysis" d'Altti Torkkeli et al., Transducers' 01 Eurosensors XV.

Le système est dans ce cas ouvert. Une goutte est directement déposée sur une surface. La surface comporte une pluralité d'électrodes inter-digitées recouvertes d'une couche isolante. La surface est rendue très hydrophobe. L'activation est basée sur la présence de forces électrostatiques générées par les électrodes placées sous la goutte. En modifiant le potentiel des électrodes, on modifie la distribution des contraintes de Maxwell à la surface de la goutte et M. Washizu a montré que cette pression électrostatique peut entraîner le déplacement de la goutte.

Cette méthode nécessite un grand nombre d'électrodes, contrairement aux exemples précédents. D'autre part, une opération de structuration de la couche isolante est rapportée dans l'article de M. Washizu afin de guider la goutte pendant son déplacement.

Dans ces deux derniers articles, on notera l'insistance sur le caractère hydrophobe des surfaces, en particulier, le liquide utilisé par Torkelli et al. est de l'eau déminéralisée. Ceci peut être très limitant pour certaines applications biologiques, où l'ajout de réactifs rend les liquides mouillants.

Il résulte de l'art antérieur exposé ci-dessus que l'application d'un champ électrostatique obtenu avec un jeu d'électrodes permet d'obtenir le déplacement d'une goutte de liquide. Différentes interprétations ont été données suivant les configurations des électrodes ou des propriétés électriques des liquides (isolants, faiblement ou fortement conducteurs). Ainsi, il a été question de force de volume diélectrique, de l'électrocapillarit de l'électro-mouillag ou de la pression électrostatique. Pour simplifier la suite de la description et par abus de langage, l'ensemble des ces différents phénomènes sera simplement désigné par "forces électrostatiques".

## Exposé de l'invention

La présente invention a été conçue pour remédier aux inconvénient présentés par les dispositifs de l'art antérieur.

Elle a pour objet un dispositif de déplacement d'au moins un petit volume de liquide sous l'effet d'une commande électrique, comprenant un substrat pourvu de premiers moyens électriquement conducteurs, le dispositif comprenant également des deuxièmes moyens électriquement conducteurs disposés en vis-à-vis des premiers moyens électriquement conducteurs, les premiers moyens électriquement conducteurs et les deuxièmes moyens électriquement conducteurs pouvant être reliés à des moyens d'alimentation électrique pour permettre l'application de forces électrostatiques au petit volume de liquide, caractérisé en ce que les deuxièmes moyens électriquement conducteurs comprennent au moins un fil conducteur disposé parallèlement au substrat et à une distance déterminée du substrat pour permettre le déplacement du petit volume de liquide le long dudit fil conducteur sous l'effet des forces électrostatiques appliquées.

Le fil conducteur, ou micro-caténaire, a pour première fonction de jouer le rôle d'une électrode. Il présente aussi une deuxième fonction qui est de guider les petits volumes de liquide. En effet, grâce aux forces de capillarité, une goutte présente sur le micro-caténaire a tendance à rester en contact avec ce fil qui assure ainsi la fonction de guidage pendant le déplacement éventuel de la goutte.

Le dispositif selon l'invention permet de déformer ou de déplacer un petit volume de liquide par l'application d'un champ électrique continu ou alternatif entre le micro-caténaire et les premiers moyens électriquement conducteurs. Le déplacement des petits volumes de liquide peut s'expliquer en faisant référence à l'art antérieur cité plus haut et décrivant les forces électrostatiques.

Avantageusement, les premiers moyens électriquement conducteurs comprennent des électrodes disposées sur une face non électriquement conductrice du substrat et alignées suivant la direction du fil conducteur.

De préférence, le fil conducteur est mouillant pour le liquide du petit volume de liquide. Ceci permet un meilleur guidage du petit volume de liquide par le micro-caténaire.

Éventuellement, les premiers moyens électriquement conducteurs et/ou les deuxièmes moyens électriquement conducteurs sont recouverts d'une couche de matériau électriquement isolant. Ceci permet, dans le cas où le liquide à déplacer est électriquement conducteur, d'interposer une couche isolante de manière à ne pas créer de courants électriques intenses à travers la goutte de liquide.

Eventuellement, le dispositif comprend un milieu ambiant dans lequel le petit volume de liquide se déplace, ce milieu ambiant étant constitué par un gaz ou un liquide non miscible avec le petit volume de liquide. Par exemple, si le liquide à déplacer est constitué d'une solution aqueuse, le milieu ambiant peut être un bain d'huile. Ceci permet d'éviter l'évaporation du liquide lorsqu'un protocole long, à température élevée est appliqué.

Selon une première variante de réalisation, la distance déterminée entre le fil conducteur et le substrat est telle que le petit volume de liquide est, en l'absence de forces électrostatiques appliquées, en contact avec le substrat, le substrat offrant un contact non mouillant avec le liquide du petit volume de liquide.

Selon une deuxième variante de réalisation, la distance déterminée entre le fil conducteur et le substrat et le diamètre du fil conducteur sont tels que le petit volume de liquide n'est pas, en l'absence de forces électrostatiques appliquées, en contact avec le substrat.

Dans ce cas, le fil conducteur étant disposé au-dessous du substrat, la distance déterminée entre le fil conducteur et le substrat peut être telle qu'une première valeur de forces électrostatiques appliquées provoque un contact entre le petit volume de liquide et le substrat. Le substrat peut alors offrir un contact mouillant au petit volume de liquide de manière à transférer le petit volume de liquide sur le substrat lorsque les forces électrostatiques appliquées sont annulées ou suffisamment diminuées. Le substrat peut aussi offrir un contact hydrophobe au petit volume de liquide de manière que le petit volume de liquide soit supporté uniquement par le fil conducteur lorsque les forces électrostatiques appliquées sont annulées ou suffisamment diminuées.

Selon un mode de fonctionnement particulier, la distance déterminée entre le fil conducteur et le substrat et le diamètre du fil conducteur sont tels que le petit volume de liquide n'est pas, en présence de forces électrostatiques de déplacement appliquées, en contact avec le substrat.

Le dispositif peut comporter des moyens permettant d'auto-aligner et d'auto-positionner le fil conducteur avec des moyens d'amenée et/ou d'évacuation du petit volume de liquide. Avantageusement, les moyens d'amenée et/ou d'évacuation du petit volume de liquide comprennent au moins un micro-capillaire.

Selon une troisième variante de réalisation, le substrat offre au petit volume de liquide une surface de rugosité asymétrique, la distance entre le fil conducteur et le substrat étant telle que, sous l'effet de forces électrostatiques appliquées, le petit volume de liquide est au contact du substrat qui, par sa surface de rugosité asymétrique, favorise le déplacement du petit volume de liquide. La surface de rugosité asymétrique peut avoir un profil en toit d'usine. La surface offerte par le substrat au petit volume de liquide peut avantageusement être non mouillante.

Il est tout à fait possible, avec le dispositif selon l'invention, d'envisager le déplacement de plusieurs gouttes sur un même micro-caténaire ou de prévoir plusieurs micro-caténaires pour le déplacement de séries de gouttes.

Ainsi, les premiers moyens conducteurs peuvent comprendre une matrice d'électrodes formant des lignes et des colonnes, les deuxièmes moyens électriquement conducteurs comprenant des fils conducteurs, à chaque ligne d'électrodes correspondant un fil conducteur.

Les premiers moyens conducteurs peuvent aussi comprendre une matrice d'électrodes formant des lignes et des colonnes, les deuxièmes moyens électriquement conducteurs comprenant une première série de fils conducteurs et une deuxième série de fils conducteurs, à chaque ligne d'électrodes correspondant un fil conducteur de la première série de fils conducteurs, à chaque colonne d'électrodes correspondant un fil conducteur de la deuxième série de fils conducteurs.

Le dispositif peut comprendre des moyens pour chauffer le fil conducteur ou éventuellement les fils conducteurs. Les moyens de chauffage peuvent être des moyens électriques permettant la circulation d'un courant électrique dans le (s) fil (s) conducteur(s). Avantageusement, le dispositif comprend des moyens de contrôle de la température du (des) fil(s) conducteur(s) à partir de la mesure de la résistance électrique du (des) fil(s) conducteur(s).

**Brève description des dessins**

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 représente de manière simplifiée une première variante de réalisation d'un dispositif de déplacement de petits volumes de liquide selon la présente invention,
- la figure 2 représente de manière simplifiée une deuxième variante de réalisation d'un dispositif de déplacement de petits volumes de liquide selon la présente invention,
- la figure 3 représente de manière simplifiée le dispositif de la deuxième variante de réalisation, dans une utilisation particulière,
- les figures 4 et 5 illustrent un mode de fonctionnement du dispositif de la figure 3,
- la figure 6 représente de manière simplifiée une troisième variante de réalisation d'un dispositif de déplacement de petits volumes de liquide selon la présente invention,
- la figure 7 représente un dispositif de déplacement de petits volumes de liquide, à plusieurs micro-caténaires, selon la présente invention,
- la figure 8 représente un dispositif de déplacement de petits volumes de liquide comportant deux séries de micro-caténaires croisées, selon la présente invention,
- la figure 9 représente un dispositif de déplacement de petits volumes de liquide à micro-caténaire contrôlé en température,
- la figure 10 est une vue de dessus d'un dispositif de déplacement de petits volumes de liquide selon l'invention, en cours de fabrication,
- les figures 11A à 11F sont des vues correspondant à la coupe XX de la figure 10 et illustrent le procédé de fabrication du dispositif correspondant à la figure 10,
- les figures 12A et 12B sont des vues en coupe, respectivement longitudinale et transversale, d'un autre dispositif de déplacement de petits volumes de liquide selon l'invention,
- les figures 13A à 13D illustrent le procédé de fabrication d'un autre dispositif de déplacement de petits volumes de liquide selon l'invention,
- les figures 14A à 14E illustrent le procédé de fabrication d'encore un autre dispositif de déplacement de petits volumes de liquide selon l'invention,
- la figure 15 est une vue de dessus d'un dispositif de déplacement de petits volumes de liquide, mettant en oeuvre des aiguillages, selon l'invention,
- la figure 16 est une vue de dessus d'un dispositif de déplacement de petits volumes de liquide, présentant des emplacements préférentiels pour les petits volumes de liquide, selon l'invention.

**Description détaillée de modes de réalisation de l'invention**

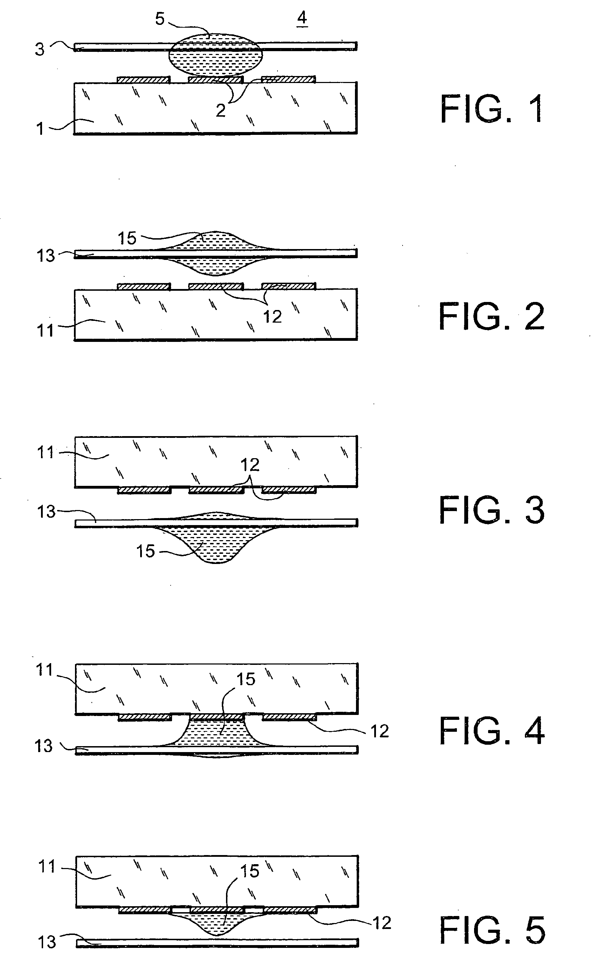

Une première variante de l'invention est représentée à la figure 1. Le dispositif représenté, qui peut être appelé puce, comprend un substrat plan 1, de préférence en matériau isolant. L'une des faces du substrat 1 comporte des électrodes 2 alignées selon la direction prévue pour le déplacement des micro-gouttes. Un fil conducteur 3 ou micro-caténaire est disposé sensiblement parallèlement au substrat 1 et à une distance déterminée par rapport à ce substrat. Le micro-caténaire 3 est situé en vis-à-vis des électrodes 2. L'ensemble baigne dans un milieu ambiant 4 qui peut être un gaz ou un liquide non miscible avec le liquide de la micro-goutte 5.

Le dispositif selon l'invention permet de déformer ou de déplacer la goutte 5 par l'application d'un champ électrique entre le micro-caténaire et au moins l'une des électrodes 2. Le déplacement de la goutte peut s'expliquer en faisant référence à l'art antérieur cité plus haut et qui concerne les forces électrostatiques.

Le micro-caténaire 3 assurant une fonction de guidage pour la goutte pendant son déplacement, il est préférable qu'il soit mouillant pour le liquide formant la goutte.

Si le liquide formant la goutte est électriquement conducteur, il est préférable de recouvrir les électrodes 2 d'une couche isolante et/ou d'enrober le micro-caténaire par une fine couche isolante.

La tension électrique appliquée entre le micro-caténaire et les électrodes, permettant la déformation ou le déplacement de la goutte, peut être continue ou alternative.

La figure 1 fait référence à une seule goutte, cependant il est tout à fait possible d'envisager le déplacement de plusieurs gouttes sur le même micro-caténaire.

La configuration du dispositif selon l'invention présente de nombreux avantages. Le micro-caténaire présente deux fonctions : une fonction électrique et une fonction de guidage de la goutte. Technologiquement, il est très simple à mettre en oeuvre. Il n'est pas nécessaire de confiner la goutte entre deux plans. Le micro-caténaire peut être très fin, ce qui limite la surface liquide/solide et donc minimise les interactions chimiques, biologique ou physico-chimique (mouillage). Le fait de mettre en contact la goutte avec le micro-caténaire permet de se placer dans une configuration électrique favorable aux différents principes permettant le déplacement de la goutte. Un autre avantage est d'avoir un composant permettant de travailler avec plusieurs modes d'utilisations qui vont être décrits dans la suite de la description.

Dans la première variante de l'invention, représentée à la figure 1, la goutte est toujours en contact avec la surface du substrat portant les électrodes. Plusieurs électrodes 2 sont alignées suivant la direction du micro-caténaire 3. Le substrat est par exemple en verre mais on peut aussi utiliser tout type de matériau isolant comme la céramique ou le plastique, ou un substrat de silicium ayant une couche isolante. Cette couche isolante peut être de l'oxyde de silicium. Les électrodes 2 peuvent être réalisées par une couche d'or ou d'aluminium ou par tout autre matériau conducteur. Les électrodes peuvent avoir une dimension de quelques dizaines de $\mu m^2$ jusqu'à 1 mm$^2$ suivant les dimensions des gouttes à transporter. La structuration des électrodes peut être obtenue par les méthodes classiques des micro-technologie, c'est-à-dire par photolithographie.

Le micro-caténaire peut être un fil d'or, d'aluminium, de platine ou d'un autre matériau conducteur. Le fil peut avoir un diamètre d'une dizaine de $\mu m$ ou d'une centaine de $\mu m$. L'espacement entre le fil conducteur et le substrat peut être d'une dizaine de $\mu m$ à plusieurs centaines de $\mu m$. Typiquement, on peut utiliser un fil d'or de 25 $\mu m$ de diamètre espacé d'une centaine de $\mu m$ du plan des électrodes.

Le micro-caténaire est connecté à un potentiel de référence Vo. On applique un potentiel V à l'une des électrodes 2, les autres étant au potentiel de référence Vo.

Il a été vérifié que la goutte tend à se placer sur l'électrode où est appliqué le potentiel V. Ceci a été observé dans le cas d'un liquide isolant tel que l'huile, ainsi qu'avec un liquide non isolant tel que l'eau salée. Dans ce dernier cas, les électrodes 2 ont été préalablement recouvertes d'une fine couche isolante de parylène d'une épaisseur de l'ordre du $\mu m$ ou d'un matériau isolant tel que l'oxyde de silicium ($SiO_2$) , du nitrure de silicium ($Si_3N_4$) ou du Téflon®.

En activant successivement les différentes électrodes on peut déplacer la goutte. Le déplacement peut s'expliquer en faisant référence à l'art antérieur. Les tensions d'activations sont de quelques centaines de volts. Moins la surface du substrat portant les électrodes est mouillante, plus la tension d'activation peut être diminuée. De même, plus les électrodes sont rapprochées, plus la tension d'activation peut être diminuée. L'espacement entre électrodes est par exemple de quelques $\mu m$.

Une deuxième variante de l'invention est représentée à la figure 2. Du point de vue de la réalisation technologique cette variante est identique à la précédente. Cependant, ici la goutte 15 est accrochée au micro-caténaire 13 sans être en contact avec les électrodes 12 présentes sur le substrat 11. Il est préférable que la surface du micro-caténaire 13 soit rendue mouillante pour le liquide formant la goutte afin d'assurer un bon accrochage. De même, les électrodes 12 peuvent être recouvertes d'une couche isolante. Il est aussi préférable d'avoir un diamètre de caténaire d'une centaine de $\mu m$ pour que les forces de capillarités soient suffisamment grandes devant les forces de pesanteur. Ainsi, des gouttes de dimensions raisonnables peuvent être accrochées au micro-caténaire. Par exemple, une goutte de plusieurs microlitres d'huile peut être accrochée à un caténaire de 300 $\mu m$ de largeur.

Il a été vérifié que l'application d'une tension électrique entre le micro-caténaire 13 et l'une des électrodes 12 placée à proximité de la goutte 15 entraîne une déformation de la goutte. Cette déformation tend à attirer la goutte vers l'électrode activée.

De cette manière, en disposant plusieurs électrodes 12 sur le substrat 11 et en alignant les électrodes suivant la direction du micro-caténaire 13, on a constaté qu'il était possible de déplacer une goutte en appliquant successivement une tension électrique entre les différentes électrodes et le micro-caténaire. Ainsi, dans ce cas, la goutte se déplace en étant supportée par le micro-caténaire sans jamais être en contact avec le substrat ou les électrodes. Dans ce cas précis, il n'y a donc pas de contrainte sur les propriétés de mouillage de la surface du substrat.

On trouvera une description de la forme onduloïdale d'une goutte mouillante sur une fibre dans l'article "Gouttes, bulles, perles et ondes" de P. G. de Gennes et al., Éditions Belin, 2002, page 19. On a aussi constaté que suivant les dimensions de la goutte, la forme pouvait être différente quand la pesanteur n'est plus négligeable. La goutte a tendance à pendre en dessous du caténaire. Dans le cas de la figure 2, les forces électrostatiques s'ajoutent à la pesanteur. Il est ainsi préférable de renverser le système pour que les forces électrostatiques s'opposent à la pesanteur afin d'éviter les risques de décrochage de la goutte du micro-caténaire. C'est ce que montre la figure 3.

Si on augmente la tension d'activation, la goutte peut se déformer jusqu'à toucher l'électrode d'activation, C'est ce que montre la figure 4.

Une diminution ou une annulation de la tension d'activation peut entraîner alors les deux scénarios suivants :

- si l'électrode 12 est mouillante (voir la figure 5), la goutte 15 restera naturellement accrochée à la surface par les forces de capillarité, le processus est alors irréversible ;
- si la surface de l'électrode 12 est très hydrophobe, la goutte démouillera de la surface pour revenir à la position illustrée par la figure 3 et dans ce cas le processus est réversible, c'est-à-dire que l'on peut à volonté imposer le contact entre la goutte et l'électrode d'activation en jouant sur la tension d'activation.

Ainsi suivant les dimensions et les propriétés de mouillage, on peut soit transférer la goutte du micro-caténaire vers le substrat soit imposer momentanément le mouillage de la goutte sur la surface du substrat.

En conclusion, avec le dispositif selon l'invention, il est possible de déplacer une goutte le long d'un micro-caténaire avec les deux possibilités suivantes :

- la goutte glisse en restant toujours en contact à la surface du substrat,
- la goutte se déplace sans qu'il y ait contact avec la surface du substrat. Dans ce dernier cas, on peut, par exemple après un déplacement sans contact sur une certaine longueur de caténaire, imposer temporairement l'étalement de la goutte sur la surface du substrat ou transférer la goutte du micro-caténaire vers la surface du substrat.

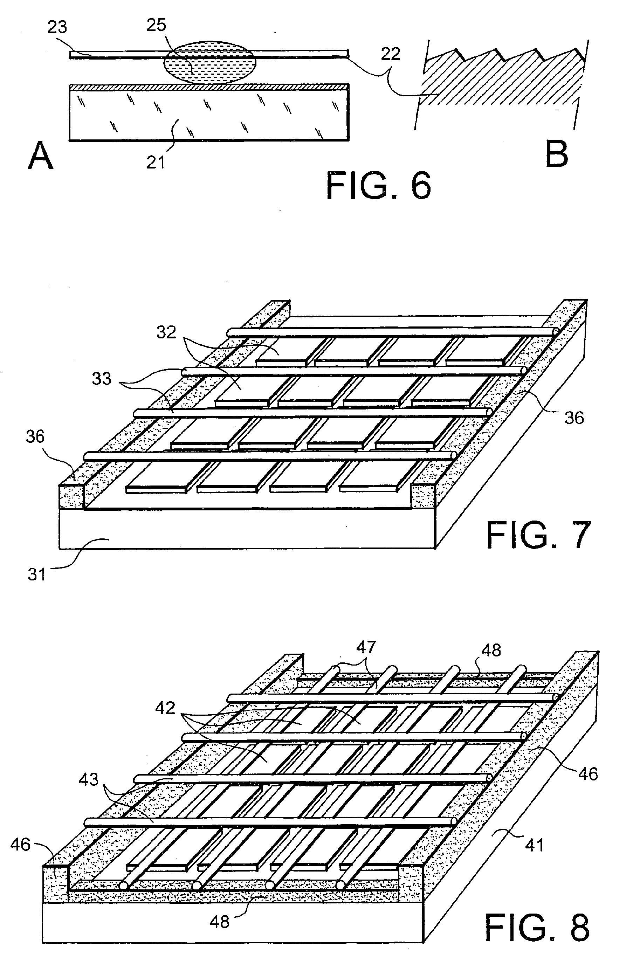

Une troisième variante de l'invention est représentée à la partie A de la figure 6. Le substrat 21 est réalisé dans un matériau conducteur ou est recouvert d'une couche conductrice 22. Il est préférable aussi de déposer une couche isolante non représentée sur la figure 6) à la surface du substrat (ou de la couche conductrice) en contact avec la goutte. De plus, cette surface présente une rugosité asymétrique (par exemple en toit d'usine) comme le montre la partie B de la figure 6).

La surface du substrat (ou de la couche conductrice) en contact avec la goutte est avantageusement rendue non mouillante vis-à-vis de la goutte 25. La goutte 25 est accrochée au micro-caténaire 23 et, de plus, repose sur la surface du substrat ou de la couche conductrice. L'application d'une tension alternative entre le micro-caténaire et la couche conductrice 22 permet de faire vibrer la goutte 25. Il a été vérifié qu'il est possible de déplacer la goutte 25 le long du micro-caténaire 23. Ceci peut s'expliquer en faisant référence à l'article "Moving droplets on asymmetrically structured surfaces" cité plus haut.

Un autre aspect de l'invention est représenté par la figure 7. Le substrat 31 supporte une matrice d'électrodes 32, réparties en lignes et en colonnes, pouvant être recouvertes d'une couche isolante (non représentée). Plusieurs micro-caténaires 33 sont mis en parallèles suivant les lignes d'électrodes. Les micro-caténaires 33 sont positionnées à une distance donnée de la surface du substrat grâce à des espaceurs 36. De cette manière, il est possible de travailler en parallèle sur plusieurs lignes d'électrodes, et de déplacer plusieurs gouttes par une des méthodes précédemment décrites.

Un autre aspect de l'invention est représenté par la figure 8. Le substrat 41 supporte une matrice d'électrodes 42, réparties en lignes et en colonnes, pouvant être recouvertes d'une fine couche isolante (non représentée). Une première série de micro-caténaires 43 est mise en parallèle suivant les lignes d'électrodes. Les micro-caténaires 43 sont positionnées à une distance donnée de la surface du substrat grâce à des espaceurs 46. Une deuxième série de micro-caténaires 47 est mise en parallèle mais placée perpendiculairement à la série de micro-caténaires 43, c'est-à-dire suivant la direction des colonnes d'électrodes. Les micro-caténaires 47 sont positionnés à une distance donnée de la surface du substrat grâce à des espaceurs 48. Les espaceurs 46 et 48 peuvent être de hauteurs différentes. Ainsi il est possible de déplacer des gouttes suivant deux directions perpendiculaires.

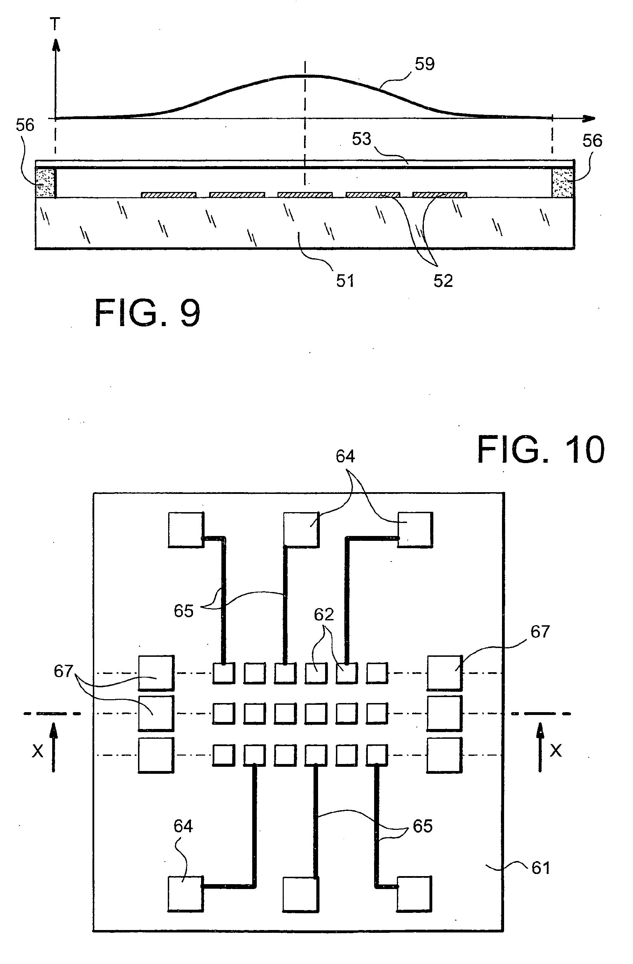

Un autre aspect de l'invention consiste à utiliser le micro-caténaire pour chauffer une goutte de liquide. Ceci peut être obtenu très facilement par effet Joule, en faisant circuler un courant électrique le long du micro-caténaire. Ceci est schématisé par la figure 9. Sur cette figure, on a représenté un substrat isolant 51 supportant des électrodes 52 alignées en vis-à-vis d'un micro-caténaire 53 supporté par des espaceurs 56. La goutte peut être amenée à une position quelconque du micro-caténaire 53 grâce à l'un des procédés décrits précédemment. De préférence, on placera la goutte au milieu du micro-caténaire. En effet, en raison de la symétrie du système, le profil de température T du micro-caténaire présente une forme de cloche schématisée par la courbe 59. Il est bien connu que la résistivité du matériau électrique dépend en générale de la température. Ainsi, on peut aisément contrôler la température du système simplement en mesurant la résistance du micro-caténaire.

L'avantage est alors d'avoir un système caténaire-goutte ayant une masse thermique très faible, ce qui n'est pas le cas de l'art antérieur où les réactions s'effectuent dans des liquides placés en contact avec des puits ou des canaux. Ainsi, il est facile de chauffer ou de laisser refroidir la goutte avec des temps très courts. Ceci est particulièrement bien adapté à certains protocoles biologiques nécessitant un cyclage en température, comme la PCR (voir l'article "Miniaturized flow-through PCR with différent template types in a silicon chip thermocycler" cité ci-dessus.

On va maintenant décrire des modes de réalisation de dispositifs selon l'invention.

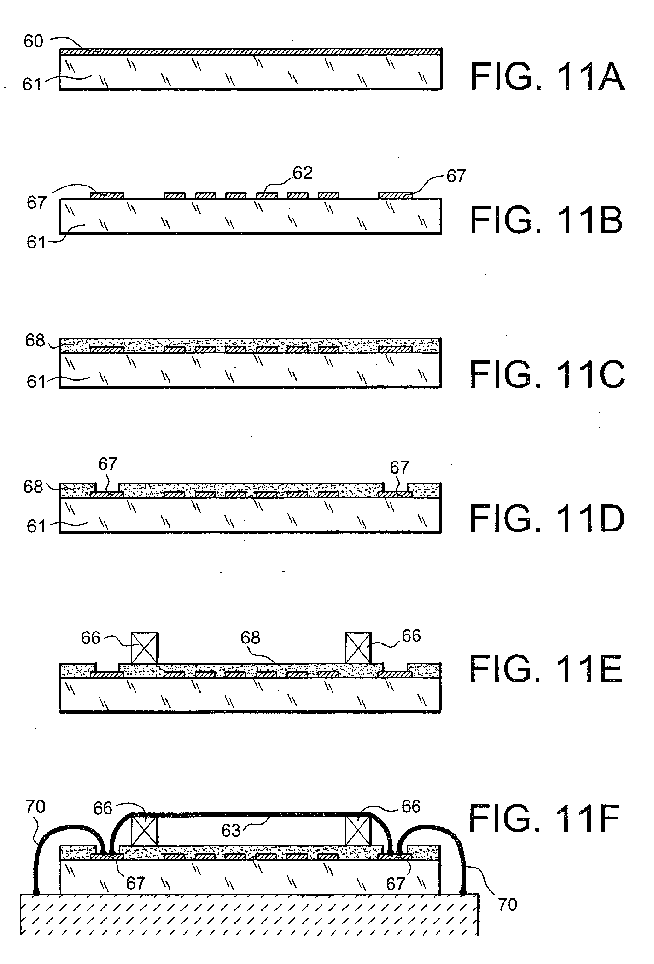

La figure 10 est une vue de dessus d'un dispositif selon un premier mode de réalisation, en cours de fabrication. Les figures 11A à 11F illustrent les étapes du procédé de fabrication selon ce premier mode.

Le dispositif comporte un substrat 61 en verre, en silice, en plastique ou en silicium recouvert d'une couche isolante. Sur ce substrat est déposée une couche conductrice 60, par exemple en or, en aluminium, ou en ITO (voir la figure 11A) . Cette couche conductrice 60 est structurée par une étape de photolithographie afin de définir une matrice d'électrodes 62 connectées à des plots 64 par des lignes 65 (voir les figures 10 et 11 B) . La dimension des électrodes est de quelques dizaines à quelques centaines de $\mu$m (typiquement 500 $\mu$m par 500 $\mu$m). L'espacement entre chaque électrode est de quelques $\mu$m (5 à 10 $\mu$m) . La structuration de la couche conductrice conduit aussi à l'obtention de plots 67 disposés de part et d'autre des lignes d'électrodes 62). Le substrat est ensuite recouvert d'une couche 68 d'un matériau isolant tel que de l'oxyde de silicium ou du $Si_3N_4$, d'épaisseur de l'ordre du 0,1 à 1 $\mu$m (voir la figure 11C). Une étape de gravure de la couche isolante localisée sur les plots 64 et 67 permettra la reprise de contact électrique (voir la figure 11D).

On dépose alors une résine épaisse (par exemple la résine EPON SU8 Epoxy Resin, cf. le brevet américain 4 882 245) que l'on structure par photolithographie pour réaliser les espaceurs 66. L'épaisseur de la couche formant l'espaceur est de quelques dizaines à quelques centaines de $\mu$m (voir la figure 11E).

Le substrat est découpé afin d'obtenir des puces individualisées (une seule puce étant montrée sur les figures 10 et 11A à 11E par souci de simplification). Par les procédés microtechnologiques, on peut ainsi réaliser sur une galette de diamètre 100 mm un grand nombre de composants. Chaque puce est collée à un support 69 comme il est coutume de faire en microélectronique (voir la figure 11F). Il reste à réaliser des ponts électriques 70 entre les plots 64 ou 67 et des plots de connexion du support 69 grâce à l'utilisation d'une machine de soudure électrique couramment utilisée en microélectronique. Avec cette même machine, on peut aussi réaliser les micro-caténaires 63 entre deux plots 67 opposés d'une même ligne d'électrodes 62. Les fils de connexion utilisés dans les machines de soudure sont par exemple des fils d'or ou d'aluminium d'un diamètre de quelques dizaines de $\mu$m (par exemple 25 $\mu$m). Suivant l'application, on choisira tel ou tel matériau pour réaliser le micro-caténaire, par exemple l'or et l'aluminium ont des propriétés de mouillage différentes.

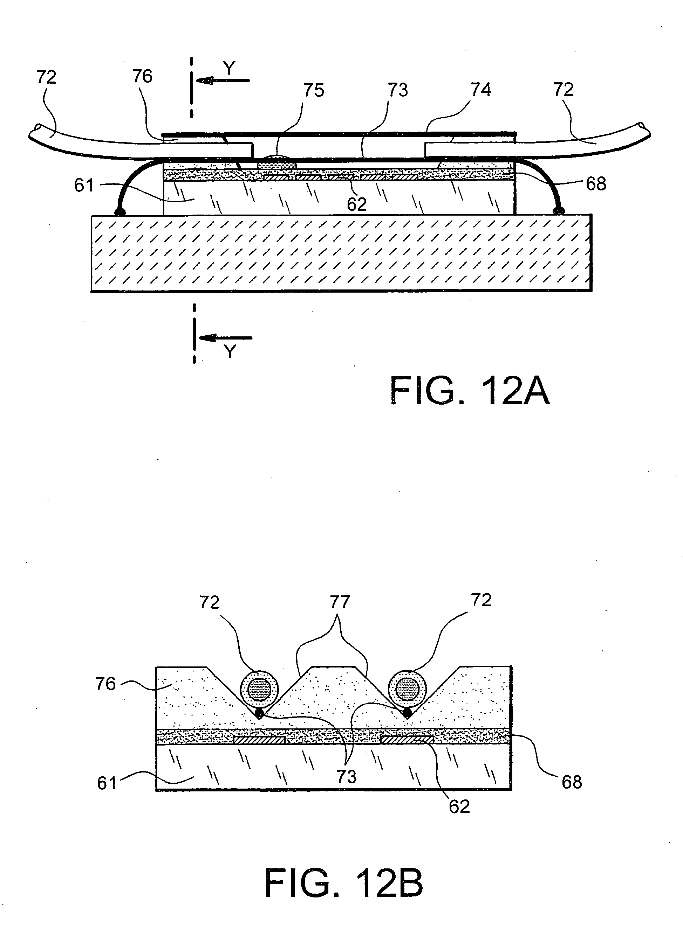

Une variante de réalisation est représentée aux figures 12A et 12B, la figure 12B étant une vue en coupe selon l'axe YY de la figure 12A. L'espaceur est réalisé par micro-usinage d'un substrat 76 assemblé au substrat 61 équipé comme le montre la figure 11D. Le substrat 76 comporte un système de rainurage 77 permettant d'auto-aligner et d'auto-positionner le micro-caténaire 73 avec une grande précision. Le rainurage peut être réalisé par exemple en réalisant des gravures chimiques anisotropes dans un substrat en silicium monocristallin.

Pour confiner le composant réalisé, par exemple pour limiter l'évaporation, on recouvre éventuellement le composant par un film 74. Un simple film autocollant peut être utilisé.

L'injection des gouttes 75 peut s'effectuer de différentes manières. On peut utiliser un système de dispense de goutte (tête d'imprimante). On peut aussi percer le film autocollant 74 par une aiguille et injecter les gouttes avec cette aiguille. Le film autocollant joue alors le rôle de septum. Une autre solution consiste à utiliser à nouveau le système de rainurage pour positionner des micro-capillaires 72. Ainsi, les extrémités des micro-capillaires 72 sont naturellement placés à proximité des micro-caténaires 73 correspondants et auto-alignés avec eux. On peut alors par exemple contrôler l'injection des liquides par un pousse-seringue connecté à l'autre extrémité des micro-capillaires ou en utilisant un système pressurisé.

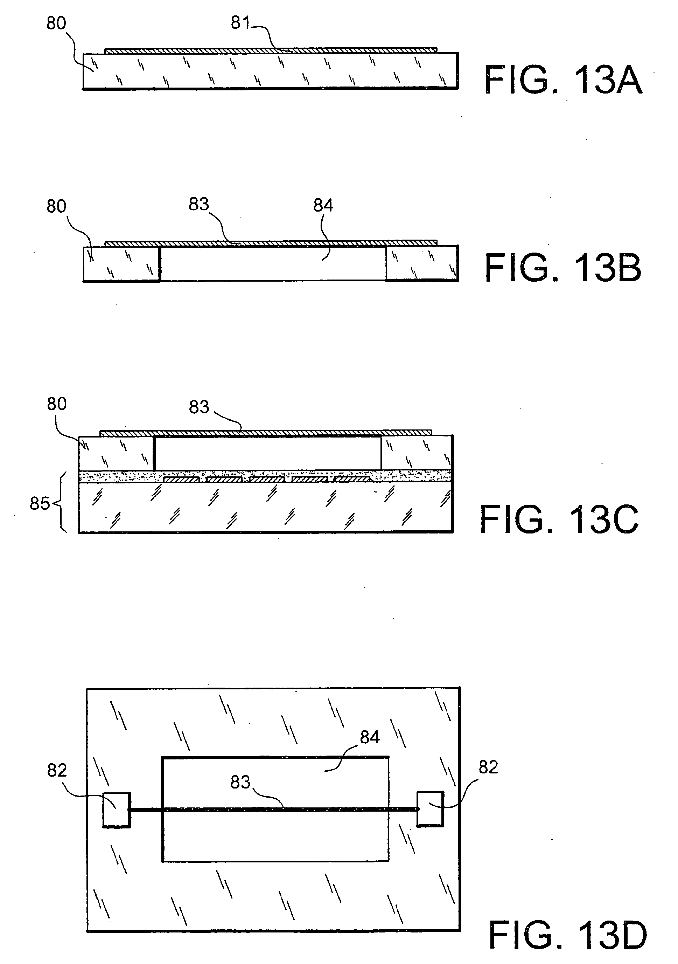

Un deuxième mode de réalisation est illustré par les figures 13A à 13D d'une part et 14A à 14E d'autre part. Dans ce mode de réalisation, le micro-caténaire est directement micro-usiné dans un deuxième substrat.

Les figures 13A à 13C sont des vues de côté et en coupe. La figure 13D est une vue de dessus correspondant à la figure 13B.

La figure 13A montre un support 80 constituant le deuxième substrat. Une couche conductrice 81 est déposée sur une face du deuxième substrat 80. Par une étape de photo-lithogravure, on définit la forme du micro-caténaire et de ses plots de connexion. La figure 13D montre la forme donnée au micro-caténaire 83 et à ses plots de connexion 82.

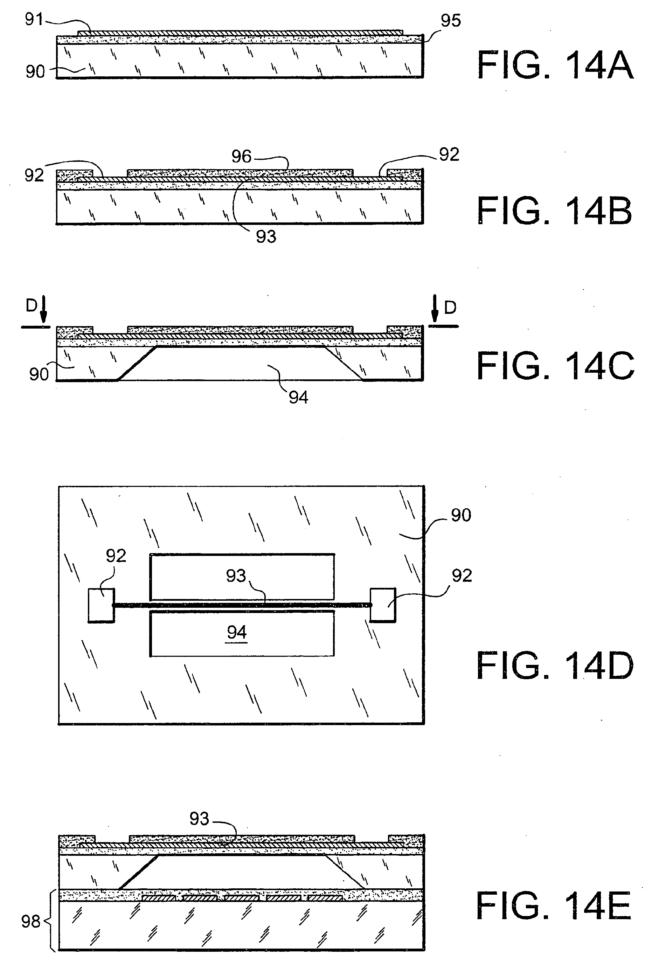

Le deuxième substrat 80 est ensuite gravé pour définir une ouverture 84 libérant le micro-caténaire 83 (voir les figures 13B et 13D). La figure 14D est une vue de dessus selon le plan DD indiqué sur la figure 14C et sans la couche 96.

Le deuxième substrat 80 ainsi usiné est solidarisé à une structure 85 du type de celle représentée à la figure 11C. La solidarisation est faite de façon que le micro-caténaire 83 soit disposé en vis-à-vis d'une rangée d'électrodes d'activation (voir la figure 13C). Les connexions électriques vers le micro-caténaire n'ont pas été représentées.

Les figures 14A, 14B, 14C et 14E sont des vues de côté et en coupe. La figure 14D est une vue de dessus correspondant au plan DD de la figure 14C.

la figure 14A montre un support 90 constituant le deuxième substrat. Une couche isolante 95 et une couche conductrice 91 sont successivement déposées sur une face du deuxième substrat 90. Par une étape de photo-lithographie, on définit la forme du micro-caténaire et de ses plots de connexion. La figure 14D montre la forme donnée au micro-caténaire 93 et à ses plots de connexion 92.

Une autre couche est déposée sur le deuxième substrat 90 en recouvrant le micro-caténaire. Par une autre étape de photo-lithographie, on définit la forme de cette autre couche et la forme de la couche 95 pour révéler les plots de connexion 92 et laisser subsister une bande étroite 96 sur le micro-caténaire 93 et une bande étroite sous le micro-caténaire 93 (voir la figure 14B).

Une opération de gravure est ensuite effectuée à partir de la face arrière du deuxième substrat 90 pour obtenir une ouverture 94 (voir les figures 14C et 14D). La figure 14D est une vue de dessus selon le plan DD indiqué sur la figure 14C et sans la couche 96.

Le deuxième substrat ainsi usiné est solidarisé à une structure 98 du type de celle représentée à la figure 11C. La solidarisation est faite de façon que le micro-caténaire 93 soit disposé en vis-à-vis d'une rangée d'électrodes d'activation (voir la figure 14E). Les connexions électriques vers le micro-caténaire n'ont pas été représentées.

Dans ce cas, le micro-caténaire est compris entre deux couches jouant le rôle de support mécanique. Les couches 95 et 96 peuvent être réalisées dans un matériau précontraint en tension afin de bien tendre et de rigidifier le micro-caténaire. Ceci peut être obtenu à partir d'un deuxième substrat 90 en silicium sur lequel on dépose des couches 95 et 96 en nitrure de silicium par un procédé PECVD permettant de contrôler le niveau de contrainte du matériau déposé. Ce mode de réalisation permet aussi d'enrober le micro-caténaire par un matériau isolant.

L'utilisation des micro-technologies permet donc de structurer les micro-caténaires par un empilement de différentes couches. On peut aussi dessiner différentes formes de micro-caténaires.

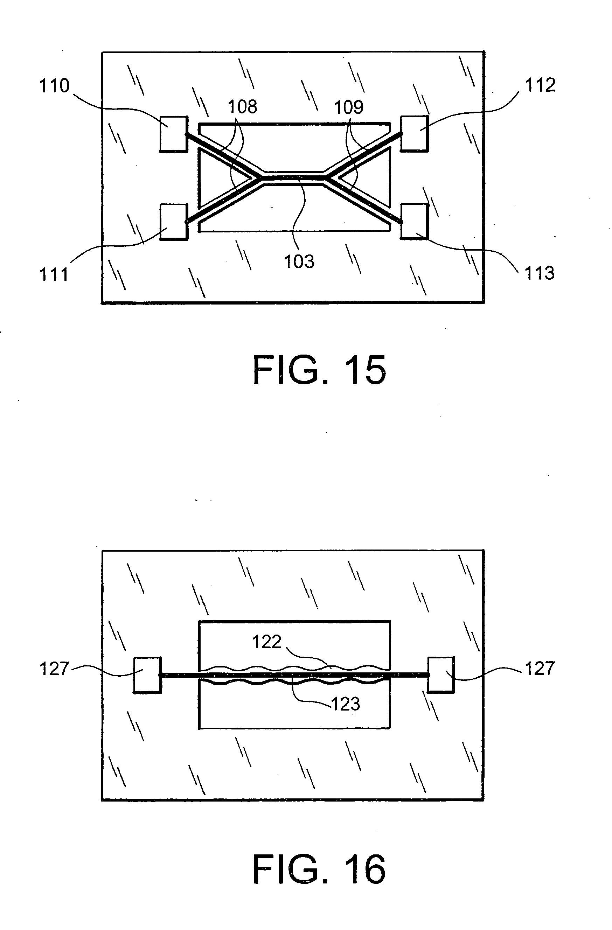

Ainsi, la figure 15 est une vue de dessus d'un dispositif selon l'invention montrant un micro-caténaire 103 pourvu d'un premier aiguillage 108 et d'un deuxième aiguillage 109. Le premier aiguillage 108 est connecté à des plots de connexion 110, 111 et le deuxième aiguillage 109 est connecté à des plots de connexion 112, 113. On remarque que le micro-caténaire 103 et les aiguillages 108 et 109 sont disposés sur un support mécanique. Les aiguillages permettent de mélanger, de trier ou de fractionner des gouttes.

La figure 16 est une vue de dessus d'un dispositif selon l'invention montrant un micro-caténaire 123 relié à des plots de connexion 127. Le micro-caténaire 123 est disposé sur un support 122 présentant une forme ondulatoire permettant de favoriser le positionnement des gouttes sur le micro-caténaire par les forces de capillarité.

## Revendications

1. Dispositif de déplacement d'au moins un petit volume de liquide (5, 15) sous l'effet d'une commande électrique, comprenant un substrat (1, 11) pourvu de premiers moyens électriquement conducteurs (2, 12), le dispositif comprenant également des deuxièmes moyens électriquement conducteurs disposés en vis-à-vis des premiers moyens électriquement conducteurs, les premiers moyens électriquement conducteurs et les deuxièmes moyens électriquement conducteurs pouvant être reliés à des moyens d'alimentation électrique pour permettre l'application de forces électrostatiques au petit volume de liquide (5, 15), **caractérisé en ce que** les deuxièmes moyens électriquement conducteurs comprennent au moins un fil conducteur (3, 13) qui forme un micro-caténaire disposé parallèlément aû substrat et à une distance déterminée du substrat pour permettre le déplacement du petit volume de liquide le long dudit fil conducteur sous l'effet des forces électrostatiques appliquées.

2. Dispositif selon la revendication 1, **caractérisé en ce que** les premiers moyens électriquement conducteurs comprennent des électrodes (2, 12) disposées sur une face non électriquement conductrice du substrat et alignées suivant la direction du fil conducteur.

3. Dispositif selon la revendication 1, **caractérisé en ce que** le fil conducteur (13) est mouillant pour le liquide du petit volume de liquide.

4. Dispositif selon la revendication 1, **caractérisé en ce que** les premiers moyens électriquement conducteurs (62) et/ou les deuxièmes moyens électriquement conducteurs sont recouverts d'une couche de matériau électriquement isolant (68).

5. Dispositif selon la revendication 1, **caractérisé en ce qu'**il comprend un milieu ambiant (4) dans lequel le petit volume de liquide (5) se déplace, ce milieu ambiant étant constitué par un gaz ou un liquide non miscible avec le petit volume de liquide.

6. Dispositif selon la revendication 5, **caractérisé en ce que** le liquide non miscible avec le petit volume de liquide est un bain d'huile.

7. Dispositif selon la revendication 1, **caractérisé en ce que** la distance déterminée entre le fil conducteur (3) et le substrat (1) est telle que le petit volume de liquide (5) est, en l'absence de forces électrostatiques appliquées, en contact avec le substrat, le substrat offrant un contact non mouillant avec le liquide du petit volume de liquide.

8. Dispositif selon la revendication 1, **caractérisé en ce que** la distance déterminée entre le fil conducteur (13) et le substrat (11) et le diamètre du fil conducteur (13) sont tels que le petit volume de liquide (15) n'est pas, en l'absence de forces électrostatiques appliquées, en contact avec le substrat.

9. Dispositif selon la revendication 8, **caractérisé en ce que** la distance déterminée entre le fil conducteur et le substrat et le diamètre du fil conducteur sont tels que le petit volume de liquide n'est pas, en présence de forces électrostatiques de déplacement appliquées, en contact avec le substrat.

10. Dispositif selon la revendication 8, **caractérisé en ce que** le fil conducteur (13) étant disposé au-dessous du substrat (11), la distance déterminée entre le fil conducteur et le substrat est telle qu'une première valeur de forces électrostatiques appliquées provoque un contact entre le petit volume de liquide et le substrat.

11. Dispositif selon la revendication 10, **caractérisé en ce que** le substrat offre un contact mouillant au petit volume de liquide (15) de manière à transférer le petit volume de liquide sur le substrat lorsque les forces électrostatiques appliquées sont annulées ou suffisamment diminuées.

12. Dispositif selon la revendication 10, **caractérisé en ce que** le substrat offre un contact hydrophobe au petit volume de liquide de manière que le petit volume de liquide (15) soit supporté uniquement par le fil conducteur lorsque les forces électrostatiques appliquées sont annulées ou suffisamment diminuées.

13. Dispositif selon la revendication 1, **caractérisé en ce qu'**il comporte des moyens (77) permettant d'auto-aligner et d'auto-positionner le fil conducteur (73) avec des moyens d'amenée et/ou d'évacuation du petit volume de liquide (72).

14. Dispositif selon la revendication 13, **caractérisé en ce que** les moyens d'amenée et/ou d'évacuation du petit volume de liquide comprennent au moins un micro-capillaire (72).

15. Dispositif selon la revendication 1, **caractérisé en ce que** le substrat (21) offre au petit volume de liquide une surface (22) de rugosité asymétrique, la distance entre le fil conducteur et le substrat étant telle que, sous l'effet de forces électrostatiques appliquées, le petit volume de liquide (25) est au contact du substrat qui, par sa surface de rugosité asymétrique, favorise le déplacement du petit volume de liquide.

16. Dispositif selon la revendication 15, **caractérisé en ce que** la surface de rugosité asymétrique a un profil en toit d'usine.

17. Dispositif selon l'une des revendications 15 ou 16, **caractérisé en ce que** la surface offerte par le substrat au petit volume de liquide est non mouillante.

18. Dispositif selon l'une quelconque des revendications 1 à 17, **caractérisé en ce que** les premiers moyens électriquement conducteurs comprennent une matrice d'électrodes (32) formant des lignes et des colonnes, les deuxièmes moyens électriquement conducteurs comprenant des fils conducteurs (33), à chaque ligne d'électrodes correspondant un fil conducteur.

19. Dispositif selon l'une quelconque des revendications 1 à 17, **caractérisé en ce que** les premiers moyens électriquement conducteurs comprennent une matrice d'électrodes (42) formant des lignes et des colonnes, les deuxièmes moyens électriquement conducteurs comprenant une première série de fils conducteurs (43) et une deuxième série de fils conducteurs (47), chaque ligne d'électrodes correspondant un fil conducteur de la première série de fils conducteurs, chaque colonne d'électrodes correspondant un fil conducteur de la deuxième série de fils conducteurs.

20. Dispositif selon l'une quelconque des revendications précédentes, **caractérisé en ce qu'**il comprend des moyens pour chauffer le(s) fil(s) conducteur(s) (53).

21. Dispositif selon la revendication 20, **caractérisé en ce que** les moyens de chauffage sont des moyens électriques permettant la circulation d'un courant électrique dans le(s) fil(s) conducteur(s) (53).

22. Dispositif selon la revendication 21, **caractérisé en ce qu'**il comprend des moyens de contrôle de la température du (des) fil(s) conducteur(s) à partir de la mesure de la résistance électrique du (des) fil (s) conducteur (s) (53).

**Claims**

1. Device for displacement of at least a small volume of liquid (5, 15) under the effect of an electrical control, including a substrate (1, 11) provided with first electrically conducting means (2, 12), the device also comprising second electrically conducting means arranged facing the first electrically conducting means, the first electrically conducting means and the second electrically conducting means possibly being connected to electrical supply means to enable the application of electrostatic forces to the small liquid volume (5, 15), **characterized in that** the second electrically conducting means include at least one conducting wire (3, 13), which forms a micro-catenary, arranged parallel to the substrate and at a fixed distance from the substrate to enable displacement of the small volume of liquid along said conducting wire under the effect of the applied electrostatic forces.

2. Device according to claim 1, **characterized in that** the first electrically conducting means comprise electrodes (2, 12) placed on a non-electrically conducting face of the substrate and parallel to the direction of the conducting wire.

3. Device according to claim 1, **characterized in that** the conducting wire (13) is wetting for the small liquid volume.

4. Device according to claim 1, **characterized in that** the first electrically conducting means (62) and / or the second electrically conducting means are covered with a layer of electrically insulating material (68).

5. Device according to claim 1, **characterized in that** it includes an ambient medium (4) in which the small liquid volume (5) displaces, this ambient medium being composed of a gas or liquid that is not miscible with the small liquid volume.

6. Device according to claim 5, **characterized in that** the liquid that is not miscible with the small liquid volume is an oil bath.

7. Device according to claim 1, **characterized in that** the determined distance between the conducting wire (3) and the substrate (1) is such that the small volume of liquid (5) is in contact with the substrate in the absence of any applied electrostatic forces, the substrate providing a non-wetting contact with the small volume of liquid.

8. Device according to claim 1, **characterized in that** the determined distance between the conducting wire (13) and the substrate (11), and the diameter of the conducting wire (13), are such that the small volume of liquid (15) is not in contact with the substrate, in the absence of any applied electrostatic forces.

9. Device according to claim 1, **characterized in that** the determined distance between the conducting wire and the substrate, and the diameter of the conducting wire, are such that the small volume of liquid is not in contact with the substrate, in the absence of any applied electrostatic forces.

10. Device according to claim 8, **characterized in that** since the conducting wire (13) is arranged below the substrate (11), the determined distance between the conducting wire and the substrate is such that a first value of applied electrostatic forces causes contact between the small liquid volume and the substrate.

11. Device according to claim 10, **characterized in that** the substrate offers a wetting contact to the small liquid volume (15) so as to transfer the small liquid volume onto the substrate when the applied electrostatic forces are cancelled out or are sufficiently low.

12. Device according to claim 10, **characterized in that** the substrate provides a hydrophobic contact to the small liquid volume so that the small liquid volume (15) is supported only by the conducting wire when the applied electrostatic forces are cancelled out or are sufficiently low.

13. Device according to claim 1, **characterized in that** it comprises means (77) of self-aligning and self-positioning the conducting wire (73) with the means of supplying and / or removing the small volume of liquid (72).

14. Device according to claim 13, **characterized in that** the means of supplying and / or removing the small volume of liquid comprise at least one micro-capillary (72).

15. Device according to claim 1, **characterized in that** the substrate (21) provides a surface (22) with asymmetric roughness to the small volume of liquid, the distance between the conducting wire and the substrate being such that the small volume of liquid (25) is in contact with the substrate under the effect of the applied electrostatic forces, and the substrate, due to its surface with asymmetric roughness, facilitates the displacement of the small liquid volume.

16. Device according to claim 15, **characterized in that** the surface with asymmetric roughness has a factory roof type profile.

17. Device according to claim 15 or 16, **characterized in that** the surface provided by the substrate to the small liquid volume is non-wetting.

18. Device according to any one of claims 1 to 17, **characterized in that** the first conducting means may comprise a matrix (32) of electrodes forming rows and columns, the second electrically conducting means comprising conducting wires (33), at each row of electrodes corresponding to a conducting wire.

19. Device according to any one of claims 1 to 17, **characterized in that** the first conducting means may also comprise a matrix (42) of electrodes forming rows and columns, the second electrically conducting means comprising a first series of conducting wires (43) and a second series of conducting wires (47), with a conducting wire in the first series of conducting wires corresponding to each row of electrodes, and a conducting wire in the second series of conducting wires corresponding to each column of electrodes.

20. Device according to any of the above claims, **characterized in that** it comprises means of heating the conducting wire(s) (53).

21. Device according to claim 20, **characterized in that** the heating means are electrical means for circulating an electrical current in the conducting wire(s) (53).

22. Device according to claim 21, **characterized in that** it comprises means of controlling the temperature of the conducting wire(s) starting from a measurement of the electrical resistance of the conducting wire(s) (53).


**Patentansprüche**

1. Vorrichtung zum Verschieben wenigstens eines kleinen Flüssigkeitsvolumens (5, 15) unter der Wirkung eines elektrischen Antriebs, ein mit ersten elektrisch leitfähigen Einrichtungen (2, 12) versehenes Substrat (1, 11) umfassend, wobei die Vorrichtung auch den ersten elektrisch leitfähigen Einrichtungen gegenüberstehende zweite elektrisch leitfähige Einrichtungen umfasst und die ersten elektrisch leitfähigen Einrichtungen und die zweiten elektrisch leitfähigen Einrichtungen mit elektrischen Versorgungseinrichtungen verbunden werden können, um die Anwendung von elektrostatischen Kräften auf das kleine Flüssigkeitsvolumen (5, 15) zu ermöglichen, **dadurch gekennzeichnet, dass** die zweiten elektrisch leitfähigen Einrichtungen wenigstens einen leitfähigen Draht (3, 13) umfassen, der eine Mikro-Oberleitung bildet, parallel zu dem Substrat und mit einem bestimmten Abstand von dem Substrat, um unter der Wirkung der angewendeten elektrostatischen Kräfte die Verschiebung des kleinen Flüssigkeitsvolumens längs des genannten leitfähigen Drahts zu ermöglichen.

2. Vorrichtung nach Anspruch 1, **dadurch gekennzeichnet, dass** die ersten elektrisch leitfähigen Einrichtungen Elektroden (2, 12) umfassen, die auf einer elektrisch nichtleitfähigen Fläche bzw. Seite des Substrats angeordnet und gemäß der Richtung des leitfähigen Drahts ausgerichtet sind.

3. Vorrichtung nach Anspruch 1, **dadurch gekennzeichnet, dass** der leitfähige Draht (13) für die Flüssigkeit des Flüssigkeitsvolumens benetzbar ist.

4. Vorrichtung nach Anspruch 1, **dadurch gekennzeichnet, dass** die ersten elektrisch leitfähigen Einrichtungen (62) und/oder die zweiten elektrisch leitfähigen Einrichtungen mit einer Schicht aus elektrisch isolierendem Material (68) überzogen sind.

5. Vorrichtung nach Anspruch 1, **dadurch gekennzeichnet, dass** sie ein Umgebungsmedium (4) umfasst, in dem das kleine Flüssigkeitsvolumen (5) sich verschiebt, wobei dieses Umgebungsmedium durch ein Gas gebildet wird, oder durch eine Flüssigkeit, die sich mit dem kleinen Flüssigkeitsvolumen bzw. der Flüssigkeit des kleinen Flüssigkeitsvolumens nicht vermischt.

6. Vorrichtung nach Anspruch 5, **dadurch gekennzeichnet, dass** das die sich nicht mit dem kleinen Flüssigkeitsvolumen vermischende Flüssigkeit ein Ölbad ist.

**7.** Vorrichtung nach Anspruch 1, **dadurch gekennzeichnet, dass** der festgelegte Abstand zwischen dem leitfähigen Draht (3) und dem Substrat (1) so ist, dass das kleine Flüssigkeitsvolumen (5), wenn die elektrostatischen Kräfte nicht angewendet werden, das Substrat berührt, wobei die Flüssigkeit des kleinen Flüssigkeitsvolumens bei diesem Kontakt das Substrat nicht benetzt.

**8.** Vorrichtung nach Anspruch 1, **dadurch gekennzeichnet**, **dadurch gekennzeichnet, dass** der festgelegte Abstand zwischen dem leitfähigen Draht (13) und dem Substrat (11) und der Durchmesser des leitfähigen Drahts (13) so sind, dass das kleine Flüssigkeitsvolumen (15), wenn die elektrostatischen Kräfte nicht angewendet werden, das Substrat nicht berührt.

**9.** Vorrichtung nach Anspruch 8, **dadurch gekennzeichnet**, **dadurch gekennzeichnet, dass** der festgelegte Abstand zwischen dem leitfähigen Draht und dem Substrat und der Durchmesser des leitfähigen Drahts so sind, dass das kleine Flüssigkeitsvolumen, wenn die elektrostatischen Verschiebungskräfte angewendet werden, das Substrat nicht berührt.

**10.** Vorrichtung nach Anspruch 8, **dadurch gekennzeichnet, dass** der leitfähige Draht (13) sich unter dem Substrat (11) befindet, wobei der festgelegte Abstand zwischen dem leitfähigen Draht und dem Substrat so ist, dass ein erster Wert der angelegten elektrostatischen Kräfte einen Kontakt zwischen dem kleinen Flüssigkeitsvolumen und dem Substrat bewirkt.

**11.** Vorrichtung nach Anspruch 10, **dadurch gekennzeichnet, dass** das Substrat dem kleinen Flüssigkeitsvolumen (15) einen netzenden Kontakt bietet, so dass sich das kleine Flüssigkeitsvolumen zum Substrat verlagert, wenn die angewendeten elektrostatischen Kräfte null oder ausreichend klein sind.

**12.** Vorrichtung nach Anspruch 10, **dadurch gekennzeichnet, dass** das Substrat dem kleinen FlüsSigkeitsvolumen (15) einen hydrophoben Kontakt bietet, so dass das kleine Flüssigkeitsvolumen nur durch den Draht getragen wird, wenn die angewendeten elektrostatischen Kräfte null oder ausreichend klein sind.

**13.** Vorrichtung nach Anspruch 1, **dadurch gekennzeichnet, dass** sie Einrichtungen (77) zur Selbstausrichtung oder Selbstpositionierung des leitfähigen Drahts (73) umfasst, mit Zuleitungs- und/oder Ableitungseinrichtungen (72) des kleinen Flüssigkeitsvolumens.

**14.** Vorrichtung nach Anspruch 13, **dadurch gekennzeichnet, dass** die Zuleitungs- und/oder Ableitungseinrichtungen des kleinen Flüssigkeitsvolumens wenigstens eine Mikrokapillare (72) umfassen.

**15.** Vorrichtung nach Anspruch 1, **dadurch gekennzeichnet, dass** das Substrat (21) dem kleinen Flüssigkeitsvolumen eine Oberfläche (22) mit asymmetrischer Rauheit bietet, wobei der Abstand zwischen dem leitfähigen Draht und dem Substrat so ist, dass das kleine Flüssigkeitsvolumen (25) unter der Wirkung der angewendeten elektrostatischen Kräfte das Substrat berührt, das aufgrund seiner asymmetrischen Rauheit die Verschiebung des kleinen Flüssigkeitsvolumens begünstigt.

**16.** Vorrichtung nach Anspruch 15, **dadurch gekennzeichnet, dass** die Oberfläche mit der asymmetrischen Rauheit das Profil eines Shed- bzw. Sägedachs hat.

**17.** Vorrichtung nach einem der Ansprüche 15 oder 16, **dadurch gekennzeichnet, dass** die Oberfläche, die das Substrat dem kleinen Flüssigkeitsvolumen bietet, unbenetzbar ist.

**18.** Vorrichtung nach einem der Ansprüche 1 oder 17, **dadurch gekennzeichnet, dass** die ersten elektrisch leitfähigen Einrichtungen eine Matrix aus Elektroden (32) umfassen, die Zeilen und Spalten bilden, und die zweiten elektrisch leitfähigen Einrichtungen einen elektrisch leitfähigen Draht (33) umfassen, wobei jeder Elektrodenzeile ein leitfähiger Draht entspricht.

**19.** Vorrichtung nach einem der Ansprüche 15 oder 17, **dadurch gekennzeichnet, dass** die ersten elektrisch leitfähigen Einrichtungen eine Matrix aus Elektroden (42) umfassen, die Zeilen und Spalten bilden, und die zweiten elektrisch leitfähigen Einrichtungen eine erste Serie von elektrisch leitfähigen Drähten (43) und eine zweite Serie von elektrisch leitfähigen Drähten (47) umfassen, wobei jeder Elektrodenspalte ein leitfähiger Draht der zweiten Serie von elektrisch leitfähigen Drähten entspricht.

**20.** Vorrichtung nach einem der vorangehenden Ansprüche, **dadurch gekennzeichnet, dass** sie Einrichtungen zum Erwärmen des (der) leitfähigen Drahts (Drähte) (53) umfasst.

**21.** Vorrichtung nach Anspruch 20, **dadurch gekennzeichnet, dass** die Erwärmungseinrichtungen elektrische Einrichtungen sind, welche das Fließen eines elektrischen Stroms in dem (den) leitfähigen Draht (Drähten) (53) ermöglichen.

**22.** Vorrichtung nach Anspruch 21, **dadurch gekennzeichnet, dass** sie Einrichtungen zum Steuern der Temperatur des (der) leitfähigen Draht (Drähte) (53) aufgrund der Messung des elektrischen Widerstands des (der) leitfähigen Draht (Drähte) (53) umfasst.

FIG. 1

FIG. 2

FIG. 3

FIG. 4

FIG. 5

FIG. 6

FIG. 7

FIG. 8

## FIG. 9

## FIG. 10

FIG. 11A

FIG. 11B

FIG. 11C

FIG. 11D

FIG. 11E

FIG. 11F

FIG. 12A

FIG. 12B

FIG. 13A

FIG. 13B

FIG. 13C

FIG. 13D

FIG. 14A

FIG. 14B

FIG. 14C

FIG. 14D

FIG. 14E

110    108    109    112

111    103    113

# FIG. 15

127    122    127

123

# FIG. 16